# EUROPÄISCHE PATENTSCHRIFT

(11) **EP 1 214 526 B1**
(45) Veröffentlichungstag und Bekanntmachung des Hinweises auf die Patenterteilung: **10.05.2006**
(21) Anmeldenummer: 00954342.2
(22) Anmeldetag: 18.07.2000
(51) Int. Cl.: F16B 47/00

(54) **UNTERDRUCK-HALTEVORRICHTUNG**
LOW-PRESSURE HOLDING DEVICE
DISPOSITIF DE FIXATION A DEPRESSION

(30) Priorität: 15.09.1999 DE 29916197 U
(43) Veröffentlichungstag der Anmeldung: 19.06.2002
(73) Patentinhaber: Ristau, Harald, 21438 Brackel (DE)
(72) Erfinder: Ristau, Harald, 21438 Brackel (DE)
(74) Vertreter: Schupfner, Georg
(86) Internationale Anmeldenummer: PCT/DE2000/002362
(87) Internationale Veröffentlichungsnummer: WO 2001/020177

(56) Entgegenhaltungen:
- EP-A- 0 606 042
- FR-A- 895 006
- FR-A- 2 577 808
- GB-A- 1 193 899
- GB-A- 1 534 235

## Beschreibung

Die Erfindung betrifft eine Unterdruck-Haltevorrichtung mit Unterdruckkammer und Ventil zum dauerhaften Halt auf im wesentlichen gasundurchlässigen Oberflächen.

Unterdruck-Haltevorrichtungen sind z.B. als Saugnapfbefestigungen an sich bekannt. Herkömmliche Saugnapfbefestigungen weisen einen Saugnapf auf, der aus einem elastischen Kunststoffmaterial hergestellt ist und einen luftdichten Abschluss zwischen Saugkonus und glatter gasundurchlässiger Anlagefläche, z.B. einer Badezimmerkachel, gewährleisten soll. Der für die Haftwirkung erforderliche Unterdruck in der Saugkammer wird durch Aufdrücken der tellerförmigen Saugfläche auf eine Anlagefläche hergestellt, wobei Luft aus der Saugkammer entweicht und durch die Rückstellkraft des elastischen Materials ein Vakuum hergestellt wird. Zur Haftwirkung durch Vakuum treten ggf. Oberflächenadhäsionskräfte.

Es sind auch Saugnapfbefestigungen bekannt, die ein leichtes Entfernen der Saugnapfbefestigung von der Anlagefläche ermöglichen, indem mittels eines zu öffnenden Verschlusses der Unterdruck in der Saugkammer durch Ausgleich mit dem Umgebungsdruck aufgehoben wird. Die US 5,511,752 schlägt hierfür eine auf dem Saugnapf verschiebbar aufgebrachte Kappe vor, worin das Verschieben bzw. Abheben der Kappe ein nach außen Öffnen der Saugkammer und ein Einströmen von Umgebungsluft bewirkt. Der die Saugwirkung hervorrufende Unterdruck wird aufgehoben, wodurch das Ablösen des Saugnapfes bewirkt wird.

Aus der US 5,553,837 ist weiterhin eine Unterdruck-Haltevorrichtung für Werkstücke bekannt, welche Vakuumkammern und zu den Auflagenflächen luftdicht abschließende Dichtungen aufweist, um Werkstücke auf Oberflächen durch Aufgabe von Vakuum mittels einer Verbindung zu einer Vakuumpumpe festzuhalten bzw. durch Wiederherstellen von Normaldruck wieder freizugeben.

Aus der DE 40 13 747 oder der WO 97/11282 ist bekannt, die Saugwirkung eines Saugnapfes durch eine mit dem Saugnapf fest verbundene Handpumpe herzustellen bzw. bei Druckverlust wieder aufzubauen.

Aus der FR 895 006-A bzw. der WO 86/04819 ist eine Venenpumpe bekannt, die aus einer Vakuumpumpe mit Kolben und Zylinder und einer externen Kammer besteht. Am Ende des Zylinders ist eine mittels eines Dichtringes verschlossene Pumpöffnung vorgesehen, an die die externe Kammer über eine mit einer Rückschlagklappe versehene Verbindung angeschlossen wird nachdem der Kolben in eine Arbeitsposition mit Unterdruck im Zylinder gebracht und dort verriegelt wurde. Durch das Aufsetzen öffnet und sich die Pumpöffnung und in der externen Kammer entsteht ein Unterdruck zum Absaugen von Giftstoffen aus der Wunde.

Die vorbekannten Ausführungsformen ermöglichen entweder keinen dauerhaften Halt auf insbesondere rauhen Oberflächen oder sind so komplex aufgebaut, daß sie sich nicht einfach und kostengünstig herstellen lassen.

Aufgabe der Erfindung ist es, die aus dem Stand der Technik bekannten Nachteile zu überwinden und eine einfache Alternative zur Klebe- oder Dübelbefestigung zu schaffen, die von ähnlich dauerhafter Festigkeit ist, darüber hinaus einfach und ohne Beschädigung von Oberflächen abnehmbar ist und nicht den Nachteil herkömmlicher Saugnäpfe ausweist, nur auf sehr glatten Untergründen und nicht dauerhaft zu haften.

Die Aufgabe wird erfindungsgemäß gelöst durch eine Unterdruck-Haltevorrichtung aufweisend eine Unterdruckkammer und ein Saugrohr gemäß Anspruch 1. Bevorzugte Ausführungsformen sind Gegenstand der Unteransprüche.

Die Unterdruck-Haltevorrichtung besteht vorzugsweise aus Kunststoff, z.B. aus einem schlagfesten Kunststoff, wie ABS und ist weiterhin zur Auflagefläche hin vorzugsweise rund bzw. oval ausgebildet.

Die Verbindung von Unterdruckkammer mit äußerer Umgebung ist vorzugsweise in Form eines Domes ausgebildet, der eine konusförmige Ausnehmung am oberen Ende aufweist in Form einer sich nach außen öffnenden kegel-, kugel- oder halbkugelförmige Auflagefläche zur Aufnahme des Ventils.

Das Ventil ist, um ein sicheres Aufliegen zu gewährleisten, entsprechend der Auflagefläche des Doms ebenfalls kegel-, kugel- oder halbkugelförmig ausgebildet. Das Ventil verjüngt sich zur Unterdruckkammer hin. Es fungiert als Absaug- / Dichtungsventil. Vorzugsweise wird das Ventil mit Hilfe elastischer Mittel, z.B. eines elastischen Bandes oder Stabes oder einer Feder, die einstückig Teil des Ventils sein können, ggf. unter Vorspannung, in der Auflagefläche gehalten.

Hierbei ist der Dom vorzugsweise so ausgebildet, dass er für das Ende des elastischen Mittels einen Halt bietet. Z.B. kann das Ventil so ausgebildet sein, dass es sich zunächst kugel-, halbkugel- oder kegelförmig nach unten verjüngt und hierbei nach unten band- oder stabartig weiter ausläuft. Am Ende des Bandes oder Stabes findet sich ein Widerhalt der in Form einer oder mehrerer, vorzugsweise zweier, abstehender Zapfen oder eines Keils ausgebildet sein kann.

Das Ventil besteht zumindest in den Bereichen, die mit der Auflagefläche in Kontakt stehen, aus einem gummielastischem Material, so daß das Ventil vorzugsweise zumindest im oberen kugel-, halbkugel- oder kegelförmigen Bereich, z.B. unter Einwirkung von Kräften, wie sie mit den Fingern ausgeübt werden, reversibel deformierbar ist.

Die Dichtung, die die Unterdruckkammer nach außen hin gasdicht gegen die Anlagefläche verschließt, ist vorzugsweise eine ggf. ein- und/oder beidseitig mit Ausgleichsrippen versehene Flachdichtung aus elastischem Material, wie Gummi. Das elastische Material weist vorzugsweise eine in Bezug auf die Anlagefläche optimierte Härte und Elastizität auf.

Die Vorrichtung zum Erzeugen des Unterdruckes ist vorzugsweise ein manuelles, z.B. handbetätigtes, Kolbensaugrohr, das am Anfang und am Ende des Saugweges Öffnungen aufweist. Das Kolbensaugrohr weist eine Kolbenzugstange mit integrierter Zughaltevorrichtung auf und weiterhin einen Saugkolben, der vorzugsweise aus elastischem Material wie Gummi gefertigt ist und z.B. mit Dichtlippen gegen das Saugrohr abdichtet. Um das Kolbensaugrohr auch in vertikaler Lage einsetzen zu können, kann die untere Öffnung des Saugrohrs auch winkelig mit der lösbaren Kupplung verbunden sein. Ggf. kann das Kolbensaugrohr mittig an der unteren Öffnung eine Rückhaltevorrichtung für das Ventil, etwa einen Dorn, aufweisen, die verhindert dass das Ventil durch die Sogwirkung des Kolbensaugrohrs aus der Aufnahmefläche herausgehoben wird. Die Vorrichtung zum Erzeugen des Unterdruckes und die Unterdruck-Haltevorrichtung sind zweiteilig ausgeführt.

Die Unterdruck-Haltevorrichtung wird nach einer bevorzugten Ausführungsform auf die Anlagefläche gesetzt und das Kolbensaugrohr mit einer an der unteren Öffnung befindlichen Dichtung auf die Kupplungsfläche mit einem leichten unterstützenden Druck aufgesetzt. Durch Herausziehen der Kolbenzugstange aus dem Saugrohr wird das Ventil aus der Vorspannung leicht angehoben und die noch vorhandene Atmosphäre aus der Unterdruckkammer weitgehend abgesogen. In dem Moment, in dem der Saugkolben die obere Öffnung passiert, welche vorzugsweise durch das im Querschnitt noch oben offene Rohr selbst gebildet wird, wird das Kegel-/Kugelventil durch die Vorspannung und die nunmehr aufgebaute Druckdifferenz gegen seine Auflagefläche gedrückt und verschließt die Unterdruckkammer gegen den Außendruck luftdicht. Beim Passieren der oberen Öffnung ist es wichtig, dass auf einen Schlag eine große Menge an Umgebungsluft in den Saugkolben eindringt, damit das Ventil der Unterdruck-Haltevorrichtung durch den plötzlichen Druckwechsel schnellstmöglich schließt. Die richtige Handhabung des Kolbensaugrohrs kann durch ein laut vernehmliches "Plopp" beim Herausziehen der Kolbenzugstange aus dem Saugrohr kontrolliert werden.

Die Unterdruck-Haltevorrichtung kann durch Öffnen des Ventils wieder leicht von der Anlagefläche entfernt werden. Das Ventil wird geöffnet, indem es durch seitlichen Druck z.B. mit dem Finger deformiert bzw. bewegt wird, wobei eine Verbindung von Unterdruckkammer mit äußerer Umgebung hergestellt wird und ein Druckausgleich zwischen Umgebungsdruck und Unterdruckkammer bewirkt wird.

Zum Anbringen der Unterdruck-Haltevorrichtung sind alle im wesentlichen lufttundurchlässigen Untergründe wie Keramik, Steingut, kunststoffbeschichtete Hölzer, Glas oder Metallflächen geeignet. Insbesondere ist für einen dauerhaften Halt auch bei rauher Struktur kein die Halteflächen beschädigendes Bohren oder sonstiges Einbringen von Schrauben oder Nägeln notwendig. Die erfindungsgemäße Unterdruck-Haltevorrichtung ermöglicht eine reversible und zerstörungsfreie Befestigung.

Nach einer weiteren Ausgestaltung der Erfindung weist die Unterdruck-Haltevorrichtung an ihrer von der Haltefläche abgewandten Oberseite eine als Aufnahme ausgestaltete Vorrichtung auf, die z.B. Geräte oder Halterungen zur Aufnahme von Gegenständen aufnehmen kann. Die Aufnahmevorrichtung kann so ausgebildet sein, dass sie die Aufnahme unterschiedlichster Accessoires im Sinne eines Systems erlaubt.

Vorzugsweise ist die Aufnahmevorrichtung schwalbenschwanzförmig ausgebildet, wobei die Verbindung durch Aufschieben auf die schmalere Seite des Schwalbenschwanzes hergestellt wird.

Weiterhin kann die Oberseite so ausgebildet sein, dass sie die Möglichkeit einer Schraubbefestigung erlaubt, indem z.B. auf der Oberseite ein Gewinde, ein Bohrloch oder eine sonstige Aufnahme für eine Schraubverbindung ausgebildet ist. Die Schraubbefestigung kann zur Aufnahme eines Hakens Verwendung finden.

Die Unterdruck-Haltevorrichtung kann in einer nicht erfindungsgemäßen Verwendungsform auch als Ein-Punkt-Befestigung eingesetzt werden, indem durch den Dom eine Schraube in die Haltefläche geschraubt wird. Durch die vorhandene Flachdichtung wird ein Verdrehen der Unterdruck-Haltevorrichtung verhindert. Die Unterdruck-Haltevorrichtung sitzt mit nur einer Schraube sicher und drehfest auf der Haltefläche auf.

Die Unterdruck-Haltevorrichtung kann z.B. im Haushalt, in Wohnmobilen, Segelbooten, Motorjachten, auf hochwertigen Holzvertäfelungen, im Messebau oder im medizinischen Bereich etwa in Operationssälen Anwendung finden, insbesondere immer dort, wo nicht geschraubt oder geklebt werden kann oder darf.

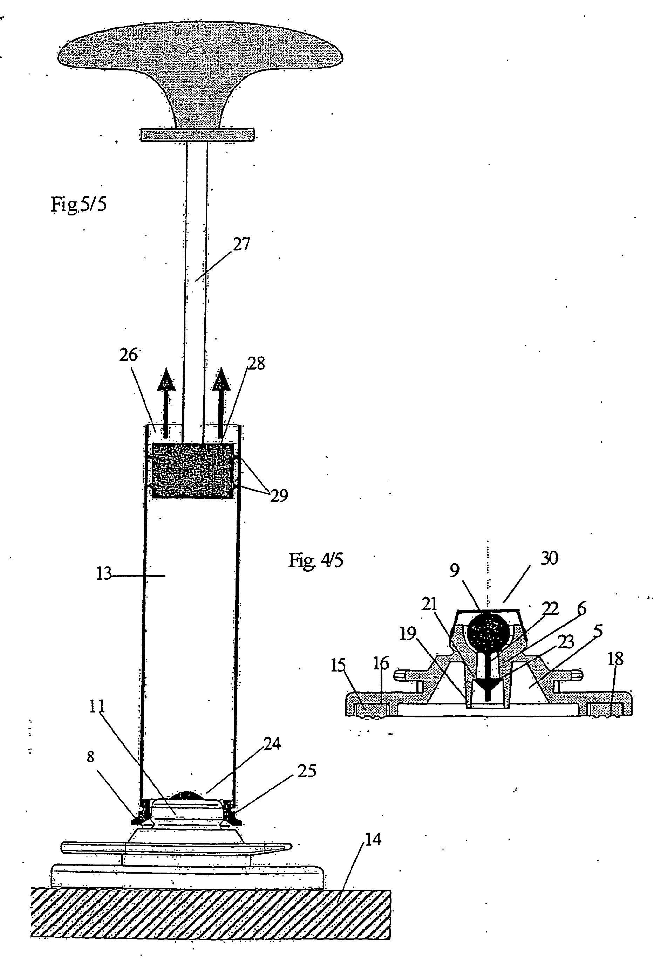

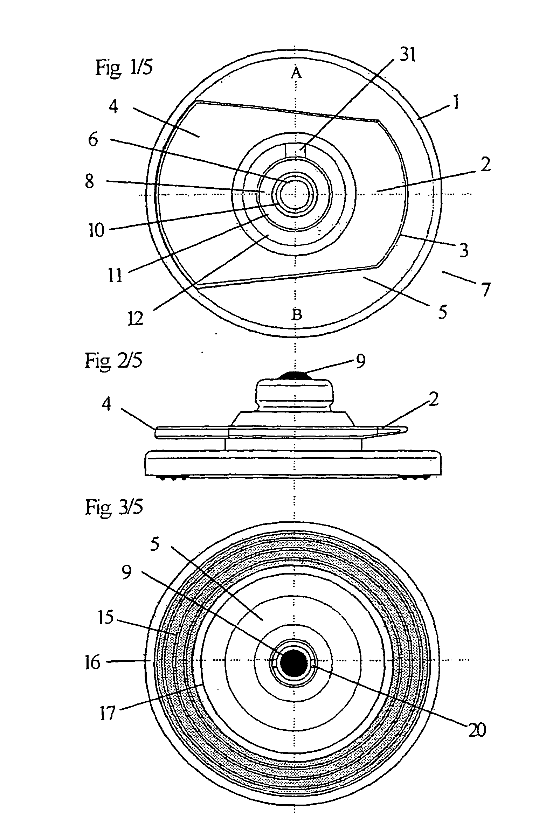

Im Folgenden wird der Gegenstand der Erfindung anhand der Figuren 1 bis 5 beispielhaft erläutert.
Figur 1 zeigt die Unterdruck-Haltevorrichtung von oben.
Figur 2 und 3 zeigen die Unterdruck-Haltevorrichtung in einer Seitenansicht (Figur 2) bzw. von unten (Figur 3).
Figur 4 zeigt einen Schnitt durch die Unterdruck-Haltevorrichtung entlang der Linie A-B.
Figur 5 zeigt das auf die Unterdruck-Haltevorrichtung aufgesetzte Kolbensaugrohr.

Die Unterdruck-Haltevorrichtung (1) weist an der Oberseite eine Halteaufnahme (2) zur Gerätehalterung in Schwalbenschwanzform auf. Auf die kurze nach oben ausgerichteten Seite (3) der Halteaufnahme wird die Gerätehalterung aufgeschoben, die durch nach unten Schieben in Richtung auf die lange Seite (4) der schwalbenschwanzförmigen Halteaufnahme (2) fest verankert wird. Die Unterdruck-Haltevorrichtung (1) ist im wesentlichen rund ausgebildet, wobei die äußere Wand der Unterdruckkammer (5) tellerförmig nach unten ausläuft. Mittig ist der Dom (6) zur Herstellung einer Verbindung zwischen Unterdruckkammer (5) und äußerer Umgebung (7) dargestellt. Der Dom (6) weist nach unten hin eine zylindrische Form auf und nach oben hin eine sich rund nach außen weitende im wesentlichen halbkugelförmige Öffnung auf, die die Auflagefläche (8) für das kugelförmige Ventil (9) bildet. Die Auflagefläche weist einige kreisförmige Riefen (10) auf, die für eine luftdichten Abschluß mit der Außenfläche des kugelförmigen Ventil sorgen. Die kreisförmige parallel zur Anlagefläche (14) ausgerichtete Fläche (12) und ggf. der obere und/oder seitlich äußere obere Rand (11) des Doms bilden Dichtflächen zur Herstellung einer lösbaren luftdichten Kupplung mit dem Saugrohr (13).

Die Unterdruckkammer (5) läuft tellerförmig zur Anlagefläche (14) nach unten aus. Der luftdichte Abschluß der Unterdruckkammer zur Anlagefläche wird durch eine Flachdichtung (15), die kreisförmig in eine Aufnahmefläche (16) am Rand (17) der Unterdruckkammer eingesetzt ist, bewirkt. Die Flachdichtung kann ggf. beidseitig ringförmige Riefen (18) aufweisen.

Der Dom (6) ist so ausgebildet, daß er rohrförmig nach unten bis kurz über die Auflagefläche geführt wird. Dies hat den Vorteil, daß bei Ausbildung eines Unterdrucks nachgebende Anlageflächen sich nicht übermäßig nach oben auswölben und durch das untere Ende des Doms (19) zurückgehalten werden. Vorsorglich finden sich am unteren Ende des Doms (19) Schlitze (20), die beim Erzeugen eines Unterdrucks dafür sorgen, daß auch bei nach oben gewölbter Anlagefläche die Unterdruckkammer ausreichend gut evakuiert werden kann. Der Dom weist weiterhin in seinem Inneren einen Vorsprung (21) auf, der so ausgebildet ist, daß er die Ventilkugel mit elastischer Verlängerung (22) und eines zapfen- oder keilförmigen Widerhalt (23) mit Hilfe der oberen Kante des Widerhalts (23) unter elastischer Spannung in der Auflagefläche (8) fixiert.

Der obere und seitlich äußere obere Rand (11) des Doms und die darunter befindliche kreisförmige parallel zur Anlagefläche (14) ausgerichtete Fläche (12) bilden wie gesagt Dichtflächen zur Herstellung einer lösbaren luftdichten Kupplung mit dem Kolbensaugrohr (13). Das Saugrohr zum Erzeugen eines Unterdruckes ist als Kolbensaugrohr ausgebildet, das am Anfang und am Ende des Saugweges Öffnungen aufweist. Die untere Öffnung des Saugrohrs (24) wird durch eine Dichtung in Form eines Rundgummis (25) abgeschlossen. Die obere Öffnung wird durch das nach oben offene Saugrohr gebildet (26). Das Kolbensaugrohr weist weiterhin eine Kolbenzugstange (27) mit integrierter Zughaltevorrichtung auf und einen Saugkolben (28), der vorzugsweise aus elastischem Material wie Gummi gefertigter ist und mit Dichtlippen (29) gegen das Saugrohr abdichtet.

Der obere Rand des Doms kann durch eine Kappe (30) verschlossen werden, die - z.B. durch Einführen eines Schraubenzieherkopfes - in einen Auslass oder Vorsprung (31) in der Kappe selbst oder in der Fläche (12) abgehebelt werden kann. Die Kappe bewirkt gleichzeitig, daß das elastische Ventil durch die innere Fläche des Kappendeckels zusätzlich abdichtend in die Auflagefläche (8) des Doms gedrückt wird.

### Bezugszeichenliste

- 1: Unterdruckhaltevorrichtung
- 2: Halteaufnahme
- 3: kurze Seite der Halteaufnahme
- 4: lange Seite der Halteaufnahme
- 5: Unterdruckkammer
- 6: Dom
- 7: äußere Umgebung, außen
- 8: Auflagefläche
- 9: Ventil
- 10: kreisförmige Riefen der Auflagefläche
- 11: äußerer obere Rand des Doms
- 12: Fläche
- 13: Kolbensaugrohr
- 14: Anlagefläche
- 15: Flachdichtung
- 16: Aufnahmefläche
- 17: Rand der Unterdruckkammer
- 18: ringförmige Riefen der Flachdichtung
- 19: unteres Ende des Doms
- 20: Schlitze im Dom
- 21: Vorsprung im Dom
- 22: elastische Verlängerung
- 23: zapfen- oder keilförmiger Widerhalt
- 24: untere Öffnung des Saugrohrs
- 25: Rundgummi
- 26: Saugrohr
- 27: Kolbenzugstange
- 28: Saugkolben
- 29: Dichtlippen
- 30: Kappe
- 31: Auslass

## Patentansprüche

1. Unterdruck-Haltevorrichtung (1) mit Vorrichtung zum Erzeugen eines Unterdrucks, wobei
- die Unterdruck-Haltevorrichtung (1) und die Vorrichtung zum Erzeugen eines Unterdrucks zweiteilig ausgebildet sind und durch Aufsetzen lösbar und im wesentlichen gasdicht verbindbar sind
wobei die Unterdruck-Haltevorrichtung (1) aufweist:
- eine Unterdruckkammer (5), die zu einer Anlagefläche (14) hin offen ist,
- eine Öffnung als Ende einer Verbindung von Unterdruckkammer mit äußerer Umgebung (7),
- ein Ventil (9), welches ein gasdichtes Schließen und Öffnen der Verbindung Unterdruckkammer (5) mit äußerer Umgebung (7) gewährleist und
- Mittel zum Herstellen einer lösbaren im wesentlichen gasdichten Kupplung von der nach Außen gerichteten Öffnung mit der Vorrichtung zum Erzeugen eines Unterdruckes,
- eine Dichtung (15), die die Unterdruckkammer nach Außen hin gasdicht gegen die Anlagefläche (14) verschließt, und
die Vorrichtung zum Erzeugen eines Unterdruckes
- ein Kolbensaugrohr (13) mit Saugkolben (28) ist, das am Anfang des Saugweges eine Öffnung (24) aufweist,
**dadurch gekennzeichnet, dass**
- am Ende des Saugweges eine vom Saugkolben (28) passierbare Öffnung (26) vorgesehen ist, so dass beim Passieren auf einen Schlag Umgebungsluft in das Kolbensaugrohr (13) eindringt.

2. Unterdruck-Haltevorrichtung (1) mit Vorrichtung zum Erzungen eines Unterdrucks gemäß Anspruch 1, **dadurch gekennzeichnet, dass** das Ventil (9) im wesentlichen kegel-, kugel- oder halbkugelförmig ausgebildet ist.

3. Unterdruck-Haltevorrichtung (1) mit Vorrichtung zum Erzungen eines Unterdrucks gemäß einem der vorhergehenden Ansprüche, **dadurch gekennzeichnet, dass** die Verbindung von Unterdruckkammer (5) mit äußerer Umgebung eine kegel-, kugel- oder halbkugelförmige Auflagefläche (8) zur Aufnahme des Ventils (9) aufweist.

4. Unterdruck-Haltevorrichtung (1) mit Vorrichtung zum Erzungen eines Unterdrucks gemäß einem der vorhergehenden Ansprüche, **dadurch gekennzeichnet, dass** das Ventil (9) zumindest in den Bereichen, die mit der Auflagefläche (8) in Kontakt stehen, aus einem gummielastischem Material besteht.

5. Unterdruck-Haltevorrichtung (1) mit Vorrichtung zum Erzungen eines Unterdrucks gemäß einem der vorhergehenden Ansprüche, **dadurch gekennzeichnet, dass** ein Teil der Mittel zur Herstellung einer lösbaren im wesentlichen gasdichten Kupplung von der nach oben gerichteten Öffnung eine Fläche ist.

6. Unterdruck-Haltevorrichtung (1) mit Vorrichtung zum Erzungen eines Unterdrucks gemäß einem der vorhergehenden Ansprüche, **dadurch gekennzeichnet, dass** die lösbare im wesentlichen gasdichte Kupplung durch eine Gummidichtung zwischen Fläche und Ansatz der Vorrichtung zum Erzeugen eines Unterdruckes hergestellt wird.

7. Unterdruck-Haltevorrichtung (1) mit Vorrichtung zum Erzungen eines Unterdrucks gemäß einem der vorhergehenden Ansprüche, **dadurch gekennzeichnet, dass** die Fläche (12) zum Ansetzen der Vorrichtung zum Erzeugen eines Unterdruckes parallel zur Anlagefläche (14) der Unterdruck-Haltevorrichtung (1) ausgerichtet ist.

8. Unterdruck-Haltevorrichtung (1) mit Vorrichtung zum Erzungen eines Unterdrucks gemäß einem der vorhergehenden Ansprüche, **dadurch gekennzeichnet, dass** die Unterdruck-Haltevorrichtung (1) eine Halteaufnahme zur Gerätehalterung aufweist.

9. Verfahren zum Befestigen der Unterdruck-Haltevorrichtung (1) mittels einer Vorrichtung zum Erzeugen eines Unterdruckes gemäß einem der vorhergehenden Ansprüche auf einer Anlagefläche (14), **gekennzeichnet durch** folgende Schritte:
- Aufsetzen der Unterdruck-Haltevorrichtung (1) auf eine Anlagefläche (14),
- Herstellen einer lösbaren im wesentlichen gasdichten Kupplung von der nach außen gerichteten Öffnung der Unterdruck-Haltevorrichtung (1) mit dem Kolbensaugrohr (13),
- Erzeugen eines Unterdruckes in der Unterdruckkammer (5) **durch** Herausziehen des Saugkolbens (28) aus dem Kolbensaugrohr (13) bis der Saugkolben (28) eine obere Öffnung (26) passiert und
- Abnehmen der Vorrichtung zum Erzeugen eines Unterdruckes.

10. Unterdruck-Haltevorrichtung (1) mit Vorrichtung zum Erzungen eines Unterdrucks gemäß einem der Ansprüche 1 bis 8, **dadurch gekennzeichnet, dass** die Dichtung (15) eine Flachdichtung aus elastischem Material ist.

## Claims

1. Low pressure holding device (1) with a device for generating a vacuum, wherein:
- the low pressure holding device (1) and the device for generating a vacuum are of a two-part design and are by positioning connected detachable and essentially gas-tight,
wherein the low pressure holding device (1) exhibits:
- a vacuum chamber (5) which is open towards a contact face (14),
- an opening as the end of a connection of the vacuum chamber to the outside environment (7),
- a valve (9) which guarantees gas-tight closing and opening of the connection of the vacuum chamber (5) to the outside environment (7), and
- means for providing a detachable, essentially gas-tight coupling from the outward directed opening to the device for generating a vacuum,
- a seal (15) which seals the vacuum chamber towards the outside against the contact face (14) gas-tight, and
the device for generating a vacuum is
- a piston suction pipe (13) with suction piston (28) which exhibits an opening (24) at the beginning of the suction path,
**characterised in that**
- at the end of the suction path an opening (26) is provided which is fully passable by the suction piston (28) so that when passing ambient air penetrates the piston suction pipe (13) in one stroke.

2. Low pressure holding device (1), with device for generating a vacuum, according to Claim 1, **characterised in that** the valve (9) has an essentially conical, spherical or hemispherical design.

3. Low pressure holding device (1), with device for generating a vacuum, according to any one of the preceding claims, **characterised in that** the connection of the vacuum chamber (5) to the outer environment exhibits a conical, spherical or hemispherical shaped contact face (8) for receiving the valve (9).

4. Low pressure holding device (1), with device for generating a vacuum, according to any one of the preceding claims, **characterised in that** the valve (9) consists of a rubber-elastic material at least in the areas which are in contact with the contact face (8).

5. Low pressure holding device (1), with device for generating a vacuum, according to any one of the preceding claims, **characterised in that** part of the means for producing a detachable, essentially gas-tight coupling of the upward directed opening is a surface.

6. Low pressure holding device (1), with device for generating a vacuum, according to any one of the preceding claims, **characterised in that** the detachable, essentially gas-tight coupling is produced by a rubber seal between the surface and shoulder of the device for generating a vacuum.

7. Low pressure holding device (1), with device for generating a vacuum, according to any one of the preceding claims, **characterised in that** the surface (12) for positioning the device for generating a vacuum is aligned parallel with the contact face (14) of the low pressure holding device (1).

8. Low pressure holding device (1), with device for generating a vacuum, according to any one of the preceding claims, **characterised in that** the low pressure holding device (1) exhibits a holding seat for supporting the device.

9. Method for securing the low pressure holding device (1) by means of a device for generating a vacuum according to any one of the preceding claims on a contact face (14), **characterised by** the following steps:
- positioning the low pressure holding device (1) on a contact face (14),
- producing a detachable, essentially gas-tight coupling from the outward directed opening of the low pressure holding device (1) to the piston suction pipe (13),
- generating a vacuum in the vacuum chamber (5) by withdrawing the suction piston(28) from the piston suction pipe (13) until the suction piston (28) passes an upper opening (26), and
- removal of the device for generating a vacuum.

10. Low pressure holding device (1), with device for generating a vacuum, according to any one of Claims 1 to 8, **characterised in that** the seal (15) is a flat seal of elastic material.

## Revendications

1. Dispositif de maintien de dépression (1) comprenant un dispositif pour générer une dépression,
- le dispositif de maintien de dépression (1) et le dispositif pour générer une dépression étant réalisés en deux parties et pouvant être reliés par la pose d'un dispositif sur l'autre de façon amovible et essentiellement étanche au gaz,
le dispositif de maintien de dépression (1) comportant les éléments suivants :
- une chambre à dépression (5) qui est ouverte en direction d'une surface d'appui (14),
- une ouverture comme extrémité d'une liaison de chambre à dépression avec un environnement (7) extérieur,
- une vanne (9), qui garantit une fermeture et une ouverture étanche au gaz de la liaison chambre à dépression (5) avec l'environnement (7) extérieur et
- des moyens pour la préparation d'un accouplement amovible et essentiellement étanche au gaz de l'ouverture dirigée vers l'extérieur avec le dispositif destiné à générer une dépression,
- un joint (15), qui ferme la chambre à dépression vers l'extérieur de façon étanche au gaz contre la surface d'appui (14) et
le dispositif pour générer une dépression
- étant un tuyau d'aspiration à piston (13) avec un piston d'aspiration (28), qui présente une ouverture (24) au début de la course d'aspiration,
**caractérisé en ce que**
sur l'extrémité de la course d'aspiration, il est prévu une ouverture (26) pouvant être traversée par le piston d'aspiration (28) de sorte que, lors du passage, de l'air ambiant pénètre d'un seul coup dans le tuyau d'aspiration à piston (13).

2. Dispositif de maintien de dépression (1) avec dispositif pour générer une dépression selon la revendication 1, **caractérisé en ce que** la vanne (9) est réalisée avec une forme sensiblement conique, sphérique ou hémisphérique.

3. Dispositif de maintien de dépression (1) avec dispositif pour générer une dépression selon l'une quelconque des revendications précédentes, **caractérisé en ce que** la liaison de la chambre à dépression (5) avec un environnement extérieur présente une surface d'appui (8) de forme conique, sphérique ou hémisphérique pour le logement de la vanne (9).

4. Dispositif de maintien de dépression (1) avec dispositif pour générer une dépression selon l'une quelconque des revendications précédentes, **caractérisé en ce que** la vanne (9) est à base d'un matériau élastique comme du caoutchouc, au moins dans les zones qui sont en contact avec la surface d'appui (8).

5. Dispositif de maintien de dépression (1) avec dispositif pour générer une dépression selon l'une quelconque des revendications précédentes, **caractérisé en ce qu'**une partie des moyens pour fabriquer un accouplement amovible et essentiellement étanche au gaz de l'ouverture dirigée vers le haut est une surface.

6. Dispositif de maintien de dépression (1) avec dispositif pour générer une dépression selon l'une quelconque des revendications précédentes, **caractérisé en ce que** l'accouplement amovible et essentiellement étanche au gaz est fabriqué à partir d'un joint en caoutchouc entre la surface et l'embase du dispositif pour générer une dépression.

7. Dispositif de maintien de dépression (1) avec dispositif pour générer une dépression selon l'une quelconque des revendications précédentes, **caractérisé en ce que** la surface (12) pour placer le dispositif destiné à générer une dépression est orientée parallèlement à la surface d'appui (14) du dispositif de maintien de dépression (1).

8. Dispositif de maintien de dépression (1) avec dispositif destiné à générer une dépression selon l'une quelconque des revendications précédentes, **caractérisé en ce que** le dispositif de maintien de dépression (1) est un logement de maintien pour la fixation de l'appareil.

9. Procédé pour la fixation du dispositif de maintien de dépression (1) au moyen d'un dispositif destiné à générer une dépression selon l'une quelconque des revendications précédentes sur une surface d'appui (14) **caractérisé par** les étapes suivantes :
- pose du dispositif de maintien de dépression (1) sur une surface d'appui (14),
- fabrication d'un accouplement amovible et essentiellement étanche au gaz de l'ouverture, dirigée vers l'extérieur, du dispositif de maintien de dépression (1) avec le tuyau d'aspiration à piston (13),
- production d'une dépression dans la chambre à dépression (5) par l'extraction du piston d'aspiration (28) du tuyau d'aspiration à piston (13) jusqu'à ce que le piston d'aspiration (28) ait traversé une ouverture (26) supérieure et
- enlèvement du dispositif pour générer une dépression.

10. Dispositif de maintien de dépression (1) avec dispositif pour générer une dépression selon l'une quelconque des revendications 1 à 8, **caractérisé en ce que** le joint (15) est un joint plat à base de matériau élastique.
